# EUROPÄISCHE PATENTANMELDUNG

(11) **EP 2 860 788 A1**
(43) Veröffentlichungstag der Anmeldung: **15.04.2015**
(21) Anmeldenummer: 13188495.9
(22) Anmeldetag: 14.10.2013
(51) Int. Cl.: H01M 2/14, H01M 2/16, H01M 10/39, H01M 10/42, H01M 2/34

(54) **Elektrochemischer Energiespeicher mit Leitfähigkeitsabschnitt zum Überladungsschutz**

(71) Anmelder: Siemens Aktiengesellschaft, 80333 München (DE)
(72) Erfinder: Kühne, Michael, Dr., 90762 Fürth (DE); Soller, Thomas, Dr., 94405 Landau/Isar (DE)

(57) **Zusammenfassung**

Die Erfindung betrifft einen elektrochemischen Energiespeicher (1) mit einer Anode (11), die mit einem Anodenraum (21) elektrisch verbunden ist, in welchem ein Anodenmaterial (31) mit einer ersten Füllstandhöhe (EF) angeordnet ist, und einer Kathode (12), die mit einem Kathodenraum (22) elektrisch verbunden ist, in welchem ein Kathodenmaterial (32) mit zweiter Füllstandhöhe (ZF) angeordnet ist, und einem Ionen leitenden Separator (13), welcher den Anodenraum (21) von dem Kathodenraum (22) trennt, wobei der Ionen leitende Separator (13) bei bestimmungsgemäßem Gebrauch des elektrochemischen Energiespeichers (1) einen Kopfbereich (5) und einen Fußbereich (6) aufweist, wobei im Kopfbereich (5) der Ionen leitende Separator (13) mindestens ein Leitfähigkeitsabschnitt (15) vorgesehen ist, welcher bei bestimmungsgemäßem Betrieb des elektrochemischen Energiespeichers (1) stärker elektronisch leitend ist, als ein elektronisch isolierender Isolationsabschnitt (16) im Fußbereich (6), wobei wenigstens ein Ladezustand des elektrochemischen Energiespeichers (1) existiert, bei welchem das Anodenmaterial (31) in dem Anodenraum (21) den Leitfähigkeitsabschnitt (15) kontaktiert.

## Beschreibung

Die vorliegende Erfindung betrifft einen elektrochemischen Energiespeicher mit einer Anode, die mit einem Anodenraum elektrisch verbunden ist, in welchem ein Anodenmaterial mit einer ersten Füllstandhöhe angeordnet ist, und einer Kathode, die mit einem Kathodenraum elektrisch verbunden ist, in welchem ein Kathodenmaterial mit einer zweiten Füllstandhöhe angeordnet ist, und einem Ionen leitenden Separator, welcher den Anodenraum von dem Kathodenraum trennt. Weiterhin betrifft die Erfindung ein elektrochemisches Speichermodul, welches wenigstens zwei solcher elektrochemischer Energiespeicher aufweist. Darüber hinaus umfasst die Erfindung ein Verfahren zur Herstellung eines solchen elektrochemischen Energiespeichers.

Elektrochemische Energiespeicher im erfindungsgemäßen Sinn können beliebige Betriebstemperaturbereiche aufweisen. Besonders bevorzugt ist jedoch ein Betriebstemperaturbereich zwischen 100 °C und 500 °C. Dieser Betriebstemperaturbereich umfasst denjenigen der elektrochemischen Energiespeicher, die auf der Grundlage der Technologie von Natrium-Nickel-Chlorid-Zellen sowie Natrium-Schwefel-Zellen arbeiten. Natrium-Nickel-Chlorid-Zellen können hierbei auch derart ausgestaltet sein, dass wenigstens ein Teil des Nickels in der Zelle durch Eisen ersetzt bzw. ergänzt ist. Solche Energiespeicher weisen bei ihren Betriebstemperaturen im Anodenraum bzw. Kathodenraum entsprechend Anodenmaterial bzw. Kathodenmaterial auf, welches im Wesentlichen flüssig vorliegt. Im Falle einer Natrium-Nickel-Chlorid-Zelle ist das Anodenmaterial etwa flüssiges Natrium. Ebenfalls lieg in einer Natrium-Nickel-Chlorid-Zelle Kathodenmaterial im Kathodenraum vor, welches wenigstens teilweise flüssig vorliegt, und eine Salzmischung aus Nickel, Kochsalz und weiteren Zusatzstoffen ist. Aufgrund des flüssigen Aggregatzustands richtet sich der Füllstand von Anodenmaterial bzw. Kathodenmaterial im Gravitationsfeld der Erde aus und lässt sich damit besonders leicht bestimmen. Der Füllstand bzw. die Füllstandhöhe entsprechen hierbei dem mittleren Füllstandspiegel des Materials (Anodenmaterial, Kathodenmaterial) in dem jeweils zugehörigen Raum (Anodenraum, Kathodenraum) bei bestimmungsgemäßer Nutzung des Energiespeichers. Hierbei ändert sich bei bestimmungsgemäßer Nutzung des Energiespeichers der Füllstand bzw. die Füllstandhöhe mit zunehmender Nutzungsdauer. Sollte das jeweilige Material lediglich nur teilweise in flüssiger Phase vorliegen, soll sich die Definition auf den Füllstandspiegel der jeweils flüssigen Phase des Materials beziehen.

Um bei Speichersystemen, welche eine Mehrzahl solcher elektrochemischer Energiespeicher elektrisch verschaltet vorliegen haben, technisch relevante Spannungswerte zu erhalten, werden für gewöhnlich eine Mehrzahl an einzelnen Energiespeichern in Reihe geschaltet und zu Strängen zusammengefasst. Derartige Stränge sind von elektrochemischen Speichermodulen umfasst. Insofern soll der Begriff des Strangs und des Speichermoduls im Folgenden im Rahmen der Erfindung als gleichbegrifflich behandelt werden.

Bei derartigen elektrochemischen Speichermodulen ist mitunter die Streubreite der Kapazitäten einzelner Energiespeicher von maßgeblicher Bedeutung für die Auslegung und Funktionseigenschaften des Gesamtsystems. Insbesondere bestimmt die geringste Kapazität eines einzelnen Energiespeichers die maximal nutzbare Kapazität des gesamten Stranges an Energiespeichern. Eine vergleichbare Feststellung kann für den unterschiedlichen Ladezustand der einzelnen Energiespeicher in einem solchen Strang getroffen werden. So bestimmt der Ladezustand des Energiespeichers mit dem höchsten Ladezustands in einem solchen Strang den Moment der Vollladung des Gesamtsystems, wohingegen der Energiespeicher mit dem geringsten Ladezustand in dem Gesamtsystem den Zeitpunkt der Entladung des Gesamtsystems bestimmt. Wird nämlich beispielsweise ein einzelner Energiespeicher nach vollständiger Aufladung weiterhin mit einer Ladespannung beaufschlagt, kann es zu weiteren unerwünschten Umsetzungen im aktiven Innenraum des Energiespeichers kommen, welche mitunter zu Beeinflussungen, Schädigungen oder sogar zur Zerstörung des Energiespeichers beitragen können. Insofern ist eine weitere Aufladung eines Stranges zu vermeiden, wenn bereits ein Energiespeicher seine Vollladung erreicht hat. Ebenso ist es möglich, dass eine Entladung eines Energiespeichers nach dessen bereits erfolgter vollständiger Entladung zu derartigen Beeinträchtigungen führen kann. Insofern ist auch eine Entladung eines Stranges zu verhindern, soweit bereits ein einzelner Energiespeicher bereits vollständig entladen vorliegt. Es stellt sich folglich als technische Notwendigkeit dar, Energiespeicher in einem elektrochemischen Speichermodul unter Berücksichtigung dieser Rahmenbedingungen zu laden bzw. zu entladen.

Wie bereits weiter oben ausgeführt, sind elektrochemische Energiespeicher in einem derartigen Speichermodul hinsichtlich ihrer Kapazitäten bzw. Ladezustände stets einer Streuung unterworfen. Die Streuung resultiert in erster Linie aus fertigungstechnischen Einflüssen, da etwa nicht das gesamte eingewogene aktive Material (Anodenmaterial, Kathodenmaterial) im Inneren des Energiespeichers zur verfügbaren Kapazität beiträgt. Ebenso sind Einflüsse der Korngrößen aktiver Materialien auf die Kapazität bekannt. Weiterhin bilden sich beim Betrieb eines Energiespeichers mitunter abstandsabhängige elektronische Leitungswege zwischen einzelnen Inseln des aktiven Materials aus (Perkolation), die zu einer Strukturveränderung und damit zu einer Änderung der elektrischen Parameter des Energiespeichers beitragen. Elektrochemische Reaktionen können so etwa nur in solchen Bereichen der Anode bzw. Kathode stattfinden, die über eine ausreichende elektrische Verbindung während der gesamten Umsetzungszeit zu einem Stromsammler des Energiespeichers haben. Elektrisch isolierte Bereiche tragen zur Umsetzung also Nichts oder im Wesentlichen Nichts bei.

Weiterhin können auch betriebsbedingte Veränderungen der Einzelkomponenten des Energiespeichers zu einer Streuung der Kapazität bzw. Ladezustände einzelner Energiespeicher in einem elektrochemischen Speichermodul beitragen. So ist es etwa bekannt, dass im Betrieb thermische Spannungen auftreten, welche ein Wachsen von Mikrorissen in dem Ionen leitenden Separator zur Folge haben können. Im Falle eines Energiespeichers, der auf der Grundlage einer Natrium-Nickel-Chlorid-Zelle basiert, ist dieser Separator ein keramischer Separator, welcher Na-β-Al₂O₃ bzw. Na-β"-Al₂O₃ aufweist. Bei Auftreten von Mikrorissen in diesem keramischen Separator kann beispielsweise bei Betriebstemperaturen elementares Natrium aus dem Anodenraum direkt mit dem Kathodenmaterial (Schmelzelektrolyt) im Kathodenraum unter Bildung von elementarem Aluminium und Kochsalz reagieren. Infolge dieser Reaktion könnte der elektronische Widerstand des Ionen leitenden Separators geringer werden, wodurch eine kontinuierliche Selbstentladung des Energiespeichers die Folge wäre. Weist beispielsweise ein solcher Ionen leitender Separator typischerweise einen elektronischen Widerstand von mehreren MΩ auf, könnte bei einer schadensbedingten Absenkung des elektronischen Widerstandes beispielsweise auf 10kΩ, bei einer Zellenspannung von 2,5V, ein kontinuierlicher Selbstentladestrom von 0,25mA fließen.

Bei Vorliegen einer elektrischen Reihenschaltung einzelner elektrochemischer Energiespeicher würde somit der Energiespeicher mit der geringsten Kapazität, bzw. dem geringsten Ladezustand den Zeitpunkt vollständiger Entladung als erster erreichen. Würde zu diesem Zeitpunkt der Energiespeicher weiterhin mit einem Entladestrom in gleicher Richtung beaufschlagt, könnte sich die Polarität des bereits entladenen Energiespeichers umkehren, was in der Regel irreversible Schädigungen bis hin zum schadensbedingten Ausfall des Energiespeichers zur Folge hätte.

Würde umgekehrt ein elektrochemisches Speichermodul mit in Serie geschalteten elektrochemischen Energiespeichern über den Zeitpunkt hinaus weiter geladen, zu welchem der erste Energiespeicher den Zustand der vollständigen Ladung erreicht hat, würde die Ladespannung in dem bereits geladenen Energiespeicher in der Regel auf unzulässig hohe Werte ansteigen, wodurch wiederum irreversible chemische Reaktionen die Funktionskomponenten des Energiespeichers beeinträchtigen könnten bzw. den Energiespeicher soweit schädigen, dass dieser ausfällt.

Um mögliche Beschädigungen einzelner Energiespeicher in einem solchen elektrochemischen Speichermodul beim Laden wie auch beim Entladen zu vermeiden, werden herkömmlicherweise Über- bzw. Tiefentladungen durch einfache Maßnahmen versucht zu vermeiden. So kann bereits anfänglich bei Zusammenstellen des elektrochemischen Speichermoduls durch gezieltes Aussortieren einzelner Energiespeicher, die nicht innerhalb eines engen Toleranzbandes hinsichtlich ihrer Kapazitäten liegen, eine vorteilhafte Vorauswahl getroffen werden. Ebenso kann bei Betrieb der Energiespeicher in dem elektrochemischen Speichermodul lediglich nur ein Teil der tatsächlich verfügbaren Kapazität genutzt werden. Beispielsweise werden hierbei nur 80% der vollständig verfügbaren Kapazität genutzt, wodurch die Flexibilität und Effizienz des Gesamtsystems jedoch vermindert wird.

Bei herkömmlichem Betrieb einzelner elektrochemischer Energiespeicher in einem Speichermodul werden zum Teil gezielte Wartungsmaßnahmen an den Energiespeichern vorgenommen, um Schädigungen durch eine Überladung bzw. durch eine übermäßige Entladung vorzubeugen. So kann etwa eine Angleichung einzelner Ladungszustände der verschiedenen Energiespeicher durch gezielte Aufladung bzw. durch Austausch einzelner Energiespeicher erreicht werden. Solche Maßnahmen können jedoch innerhalb eines Wartungsintervalls weiterhin nicht vermeiden, dass der Ladezustand einzelner elektrochemischer Energiespeicher zunehmend streut, so dass eine zunehmende Verminderung der verfügbaren Kapazität beim Gesamtsystem in Kauf genommen werden muss.

Die der Erfindung zugrundeliegende Aufgabe besteht somit darin, diese aus dem Stand der Technik bekannten Nachteile zu vermeiden. Insbesondere soll ein geeignetes Angleichen der Ladungszustände einzelner elektrochemischer Energiespeicher in einem Speichermodul beim Aufladen leicht und ohne zusätzlichen Schaltungsaufwand erreicht werden können. Weiterhin ist es wünschenswert, eine Überladung einzelner Energiespeicher in einem Speichermodul, auch während eines Wartungsintervalls zu verhindern, um so etwa Beschädigungen durch Überspannungen bzw. ungewünschte chemische Reaktionen zu vermeiden. Weiterhin soll es ermöglicht werden, einzelne Energiespeicher sicher und für den Benutzer ohne Gefahr betreiben zu können und gleichzeitig die Lebensdauer eines elektrochemischen Energiespeichers, der in einem Speichermodul verschaltet ist, zu verlängern.

Diese der Erfindung zugrundeliegenden Aufgaben werden durch einen elektrochemischen Energiespeicher gemäß Anspruch 1 sowie durch ein elektrochemisches Speichermodul gemäß Anspruch 10, wie auch durch ein Verfahren zur Herstellung eines solchen elektrochemischen Energiespeichers gemäß Anspruch 12 gelöst.

Insbesondere werden diese der Erfindung zugrundeliegenden Aufgaben gelöst durch einen elektrochemischen Energiespeicher mit einer Anode, die mit einem Anodenraum elektrisch verbunden ist, in welchem ein Anodenmaterial mit einer ersten Füllstandhöhe angeordnet ist, und einer Kathode, die mit einem Kathodenraum elektrisch verbunden ist, in welchem ein Kathodenmaterial mit einer zweiten Füllstandhöhe angeordnet ist, und einem Ionen leitenden Separator, welcher den Anodenraum von dem Kathodenraum trennt, wobei der Ionen leitende Separator bei bestimmungsgemäßem Gebrauch des elektrochemischen Energiespeichers einen Kopfbereich und einen Fußbereich aufweist, wobei im Kopfbereich des Ionen leitenden Separators ein bzw. mindestens ein Leitfähigkeitsabschnitt vorgesehen ist, welcher bei bestimmungsgemäßem Betrieb des elektrochemischen Energiespeichers stärker elektronisch leitend ist, als ein elektronisch isolierender Isolationsabschnitt im Fußbereich, wobei wenigstens ein Ladezustand des elektrochemischen Energiespeichers existiert, bei welchem das Anodenmaterial in dem Anodenraum und möglicherweise auch das Kathodenmaterial in dem Kathodenraum den Leitfähigkeitsabschnitt kontaktieren.

Weiter werden die der Erfindung zugrundeliegenden Aufgaben gelöst durch ein elektrochemisches Speichermodul, welches wenigstens zwei der vorab, wie auch nachfolgend beschriebenen elektrochemischen Energiespeicher aufweist, die miteinander elektrisch seriell verschaltet sind.

Ebenso werden diese der Erfindung zugrundeliegenden Aufgaben gelöst durch ein Verfahren zur Herstellung eines solchen vorab, wie auch nachfolgend beschriebenen elektrochemischen Energiespeichers, welches folgende Schritte umfasst:
- Herstellen des Ionen leitenden Separators durch Bereitstellen eines geformten Grünkörpers;
- Infiltrieren des Grünkörpers mit Zusatzstoffen, die zur Ausbildung eines elektronisch leitenden Leitfähigkeitsabschnitts nach thermischer Behandlung geeignet sind;
- Thermisches Behandeln des Grünkörpers zum Stabilisieren desselben.

Anode und Kathode umfassen erfindungsgemäß die elektronisch leitenden Bereiche, welche zum Spannungsabgriff elektrisch kontaktiert werden können. Der Anodenraum, wie der Kathodenraum zeichnen sich ferner dadurch aus, dass sie elektrochemisch aktive Bereiche umfassen, also Materialien (Anodenmaterial und Kathodenmaterial), welche infolge der elektrochemischen Reaktionen stofflichen Veränderungen unterworfen sind.

Die erste Füllstandhöhe des Anodenmaterials, wie auch die zweite Füllstandhöhe des Kathodenmaterials variieren hierbei typischerweise aufgrund der unterschiedlichen Ladungszustände (bzw. Entladungszustände), bei welchen unterschiedliche Mengen an Anodenmaterial und Kathodenmaterial elektrochemisch umgesetzt sind. Hierbei korreliert die Menge des Anodenmaterials mit der Menge des Kathodenmaterials invers (gekoppelt über die stöchiometrischen Umsatzformeln), d.h. bei Zunahme von Anodenmaterial etwa in Folge einer Aufladung des Energiespeichers, nimmt die Menge des Kathodenmaterials entsprechend ab. Da das Anodenmaterial und/oder auch das Kathodenmaterial wenigstens teilweise frei beweglich in dem Anoden- bzw. in dem Kathodenraum geordnet sind, richten sich die jeweiligen Füllstände in dem Feld der Erdanziehung aus. Dementsprechend resultieren größere oder geringere Füllstandhöhen der einzelnen Materialien.

Erfindungsgemäß ist es erforderlich, dass das Anodenmaterial und das Kathodenmaterial den Ionen leitenden Separator wenigstens bereichsweise kontaktieren. Der Ionen leitende Separator ist bevorzugt als Festkörperelektrolyt ausgebildet, welcher spezifisch Ionen leitend ist, vor allem dann, wenn der Festkörperelektrolyt über eine vorbestimmte Betriebstemperatur (etwa zwischen 100 °C und 500 °C) erwärmt ist. Um eine spezifische Ionenleitfähigkeit auszubilden, ist der Ionen leitende Elektrolyt mit geeigneten Dotierstoffen dotiert. Ein Festkörperelektrolyt eignet sich hierbei besonders als Ionen leitender Elektrolyt, da dieser auch bei hohen Betriebstemperaturen bzw. großen Temperaturänderungen weitgehend stabil und unveränderlich bleibt.

Der Kopfbereich des Ionen leitenden Separators betrifft einen Bereich des Energiespeichers, welcher bei bestimmungsgemäßem Betrieb vom Erdzentrum weiter entfernt angeordnet ist als der Fußbereich. Insofern betrifft der Fußbereich einen Bereich des Ionen leitenden Separators, welcher näher am Zentrum der Erde bei bestimmungsgemäßem Betriebs des elektrochemischen Energiespeichers angeordnet ist. In anderen Worten werden sich frei bewegliche flüssige und frei bewegliche feste Bestandteile des Anodenmaterials und des Kathodenmaterials bei bestimmungsgemäßem Betrieb vermehrt im Fußbereich des Ionen leitenden Separators aufgrund der Erdanziehung ansammeln. Der Kopfbereich und Fußbereich können jedoch hinsichtlich ihrer absoluten Ausdehnung variieren. Beispielsweise kann der Kopfbereich mehr als, weniger als oder genau die Hälfte des Ionen leitenden Separators in einer Ausdehnungsrichtung parallel zum Erdanziehungsfeld einnehmen. Gleiches gilt natürlich auch für den Fußbereich.

Besonders bevorzugt sind elektrochemische Energiespeicher ausgebildet als ein auf der Technologie der Natrium-Nickel-Chlorid-Zelle (NaNiCl₂) bzw. auf der Technologie der Natrium-Schwefel-Zelle (NaS) basierender Energiespeicher.

Erfindungsgemäß wird gewährleistet, dass eine Strombrücke (Entladebrücke) zur Ausbildung eines Leckstroms zwischen Anode und Kathode erzeugt wird, wenn sowohl die erste Füllstandhöhe des Anodenmaterials als auch die zweite Füllstandhöhe des Kathodenmaterials den Leitfähigkeitsabschnitt kontaktieren. Sowohl Anodenmaterial als auch Kathodenmaterial liegen also jeweils an einer Seite des Leitfähigkeitsabschnitts an. Da der Leitfähigkeitsabschnitt von dem Ionen leitenden Separator umfasst ist, liegen Anodenmaterial und Kathodenmaterial auch an diesem jeweils an einer Seite an. Durch die elektrische Entladung über den Leitfähigkeitsabschnitt zwischen Anode und Kathode kommt es zur Verminderung der Zellenspannung, die auf einer reversiblen Zersetzung des Kathodenmaterials unter Bildung von metallischem Aluminium in dem Kathodenraum beruht. Bei Entladung über diese so ausgebildete Strombrücke geht die Ladeenergie als Verlustwärme (Ohmsche Verluste) in dem Energiespeicher verloren. Infolgedessen wird der Innenraum des Energiespeichers (Anodenraum bzw. Kathodenraum) bei längerfristigem Betrieb in Reihenschaltung mehrerer elektrochemischer Energiespeicher vor unzulässig hohen Spannungen geschützt, welche bei Überladung bzw. übermäßiger Beaufschlagung des Energiespeichers mit elektrischer Energie auftreten können. In anderen Worten wird bei Reihenschaltung mehrerer elektrochemischer Energiespeicher der elektrochemische Energiespeichers mit dem höchsten Ladezustand als erster teilweise entladen, während alle anderen elektrochemischen Energiespeicher von geringerem Ladezustand noch weiter geladen werden können. In Summe werden sich somit alle elektrochemischen Energiespeicher untereinander sukzessive in ihrem Ladezustand angleichen.

Eine vorteilhafte Wirkung des so angeglichenen Ladezustands der elektrochemischen Energiespeicher ist, dass bei Entladung der in Reihe geschalteten Energiespeicher alle Energiespeicher etwa gleichzeitig den unteren zulässigen Ladezustand erreichen. Durch die Gleichzeitigkeit wird es weniger wahrscheinlich, dass einzelne elektrochemische Energiespeicher tief entladen oder sogar umgepolt werden können.

Ausführungsgemäß kann auch vorgesehen sein, dass sich lediglich die erste Füllstandhöhe des Anodenmaterials oder die zweite Füllstandhöhe des Kathodenmaterials soweit ändert, dass sie sich zwischen Leitfähigkeitsabschnitt und Isolationsabschnitt bewegt. Für den Fall, bei welchem sich etwa nur die Füllstandhöhe des Anodenmaterials im Anodenraum bewegt, kann vorgesehen sein, dass im Kathodenraum ein direktes Abfließen elektronischer Ladungsträger vom Leitfähigkeitsabschnitt auf das Kathodenmaterial oder die Kathode ermöglicht wird, und zwar unabhängig vom Füllstand des Kathodenmaterials. Eine füllstandsunabhängige Kontaktierung des Kathodenmaterials mit dem Leitfähigkeitsabschnitt kann z.B. durch ein geeignetes Stück Kohlefilz ebenso erreicht werden wie z.B. durch eine direkte metallische Leitfähigkeitsbrücke innerhalb des Kathodenraums. In anderen Worten wird in diesem Fall erfindungsgemäß eine elektronische Verbindung zwischen Kathode und Leitfähigkeitsabschnitt hergestellt, welche den Leitfähigkeitsabschnitt damit auf das elektrochemische Potenzial der Kathode hebt, bis während des Ladevorgangs bei hohen Ladungszuständen des elektrochemischen Energiespeichers das Anodenmaterial den Leitfähigkeitsabschnitt erreicht und somit die elektronische Strombrücke zwischen Anode und Kathode geschlossen wird.

Alternativ zu den Ausführungsformen, die auf einer füllstandsunabhängigen Kontaktierung des Kathodenmaterials mit dem Leitfähigkeitsabschnitt basieren, kann die Füllstandhöhe des jeweils anderen Materials auch stets eine ausreichend große Füllstandhöhe aufzuweisen, so dass dieses stets mit dem Leitfähigkeitsabschnitt in elektrischem Kontakt ist. Tritt nun etwa die Füllstandhöhe des anderen Materials mit dem Leitfähigkeitsabschnitt ebenfalls in Kontakt, kommt es zur Ausbildung der Strombrücke und damit zur elektrischen Entladung über dieselbe.

Die ausführungsgemäß ausgebildete Strombrücke kann also auch als zeitweise "Kurzschlussstrecke" verstanden werden, wobei jedoch eine Verminderung des elektronischen Widerstands auf Werte, die etwa mit reinen metallischen Leitern vergleichbar sind, nicht vorgesehen sein sollen. Vielmehr werden die Entladeströme im Sinne von Leckströmen, welche im Verhältnis zu üblichen Betriebsströmen des elektrochemischen Energiespeichers gering sind, über längeren Betrieb hinweg eine Überladung einzelner elektrochemischer Energiespeicher verhindern.

An dieser Stelle sei darauf hingewiesen, dass die Kathode vorliegend auch im Sinne einer positiven Elektrode (Pluspol) sowie die Anode auch im Sinne einer negativen Elektrode (Minuspol) beim Entladen des Energiespeichers verstanden werden kann. Beim Laden des Energiespeichers vertauschen sich entsprechend die Bezeichnungen (Anode bzw. Kathode) der Pole.

Weiter sei darauf hingewiesen, dass ein bestimmungsgemäßer Betrieb des Energiespeichers sich auf alle Betriebszustände des Energiespeichers bezieht, die er einnehmen kann. Insbesondere sind dies ein Zustand während des Ladens, Entladens bzw. während weiterer Funktionszustände, wie etwa ein Stand-By-Betrieb bei nur sehr geringer Stromentnahme.

Zusammenfassend lässt sich also sagen, dass es erfindungswesentlich ist, dass wenigstens eines der beiden Materialien aus Anodenmaterial und Kathodenmaterial seine Füllstandhöhe während des Ladens bzw. Entladens des elektrochemischen Energiespeichers ändert. Die Änderung der Füllstandhöhe des Anodenmaterials etwa im Falle einer auf der Basis der Natrium-Nickel-Chlorid-Zelle basierenden Energiespeichers, beträgt bis zu 8 cm oder sogar noch darüber. Die Füllstandhöhe wird neben elektrochemischen Rahmenbedingungen auch noch maßgeblich von der Geometrie des Anodenraums bzw. Kathodenraums mitbestimmt.

Im Falle eines elektrochemischen Energiespeichers, der auf der Basis einer Natrium-Nickel-Chlorid-Zelle arbeitet, ist der Ionen leitende Separator als keramischer Separator ausgebildet. Hierbei weist der Separator eine möglichst gute ionische Leitfähigkeit auf, wohingegen gleichzeitig die elektronische Leitfähigkeit minimal bzw. stark vermindert gehalten werden soll. Wird nun eine solche Zelle vollständig geladen, steigt die erste Füllstandhöhe des Anodenmaterials im Anodenraum auf einen bestimmungsgemäßen maximalen Wert. Befindet sich dieser Energiespeicher nun jedoch in einem elektrochemischen Speichermodul in serieller Verschaltung mit weiteren Energiespeichern, würde die Beaufschlagung des Energiespeichers mit zusätzlicher elektrischer Energie zur Überladung des Energiespeichers führen. Ausführungsgemäß wird einer Überladung aber nun dadurch vorgebeugt, indem das Anodenmaterial (flüssiges Natrium) mit dem Leitfähigkeitsabschnitt in Kontakt gerät, und so eine interne Stromentladung zwischen Anodenraum und Kathodenraum erfolgen kann.

Durch eine geeignete Wahl der Geometrie des Leitfähigkeitsabschnittes (in der Fläche, wie auch in der Dicke über die Ausdehnung des Ionen leitenden Separators) als auch in Bezug auf eine stoffliche Zusammensetzung innerhalb des Leitfähigkeitsabschnittes kann die interne Selbstentladung mit zunehmendem Ladezustand beispielsweise sogar noch zunehmen, was den relativen Ausgleich der Ladezustände einzelner Energiespeicher, die in einem elektrochemischen Speichermodul verschaltet sind, im Vergleich zu anderen Energiespeichern verbessern kann. Durch das Vorsehen eines solchen Leitfähigkeitsabschnitts innerhalb des Energiespeichers wird folglich die Angleichung individueller Ladezustände im Gesamtsystem je nach einzelnem Ladezustand spezifisch ausgeführt. So kann bereits während einer einmaligen Aufladung der Ladezustand von weniger geladenen Energiespeichern mit denen von stärker geladenen Energiespeichern aufholen, wodurch sich über längere Zeiträume bei regelmäßiger Vollladung des Speichermoduls insgesamt die Ladezustände der einzelnen Energiespeicher immer wieder angleichen.

Gemäß einer ersten besonders bevorzugten Ausführungsform des elektrochemischen Energiespeichers ist vorgesehen, dass der Ionen leitende Separator genau einen Leitfähigkeitsabschnitt und einen Isolationsabschnitt aufweist, welche aneinander grenzen. Ausführungsgemäß kann also beispielsweise der gesamte Kopfbereich elektronisch leitend ausgestaltet sein, also dem Leitfähigkeitsabschnitt entsprechen. Bevorzugt weist der Ionen leitende Separator auch eine Becherform auf, die ganz besonders bevorzugt abschnittsweise zylindrisch ist. Demgemäß kann also ein oberer Bereich dieses Bechers einen Leitfähigkeitsabschnitt ausbilden, wohingegen der Rest des Ionen leitenden Separators den Isolationsabschnitt im Fußbereich ausbilden kann. Der Isolationsabschnitt entspricht ausführungsgemäß dem Ionen leitenden Separator, welcher eine schlechte elektronische Leitfähigkeit aufweist. Durch Vorsehen lediglich eines Leitfähigkeitsabschnitts kann eine einfache Herstellung des den Leitfähigkeitsabschnitt umfassenden Ionen leitenden Separators erreicht werden.

Entsprechend einer weiteren bevorzugten Ausführungsform des Energiespeichers ist vorgesehen, dass der Leitfähigkeitsabschnitt in permanentem elektronischen Kontakt zum Kathodenmaterial ist. Damit ist bereits ausreichend für das Ausbilden eines Leckstroms über den Leitfähigkeitsabschnitt, dass ein Ladezustand des elektrochemischen Energiespeichers existiert, bei welchem das Anodenmaterial in dem Anodenraum den Leitfähigkeitsabschnitt kontaktiert. Zur Ausbildung des Leckstroms ist also ausreichend, dass lediglich das Anodenmaterial während des Betriebs des Energiespeicher soweit seine erste Füllstandhöhe ändert, dass dieses den Leitfähigkeitsabschnitt erreicht.

Entsprechend einer weiteren Ausführungsform kann vorgesehen sein, dass der Leitfähigkeitsabschnitt auf der Seite des Kathodenraums bei bestimmungsgemäßem Gebrauch des Energiespeichers mit Kathodenmaterial benetzt ist. Eine Benutzung kann etwa durch Hilfsvorrichtungen erreicht werden, etwa durch einen Schwamm, ein Netz, einen Filz oder auch andere Vorrichtungen, die für das Bewirken einer Benetzung geeignet sind. Dadurch kann, wie weiter oben bereits ausgeführt, erreicht werden, dass es für das Ausbilden eines Leckstroms über den Leitfähigkeitsabschnitt bereits ausreichend ist, dass ein Ladezustand des elektrochemischen Energiespeichers existiert, bei welchem das Anodenmaterial in dem Anodenraum den Leitfähigkeitsabschnitt kontaktiert.

Gemäß einer weiteren bevorzugten Ausführungsform des elektrochemischen Energiespeichers ist vorgesehen, dass der Leitfähigkeitsabschnitt derart angeordnet ist, dass bei bestimmungsgemäßem Gebrauch des Energiespeichers, der Leitfähigkeitsabschnitt auf einer einheitlichen Füllstandhöhe an den Isolationsabschnitt grenzt. Diese einheitliche Füllstandhöhe entspricht einer möglichen Füllstandhöhe, welche durch das Anodenmaterial bzw. das Kathodenmaterial erreicht werden kann. Die einheitliche Füllstandhöhe kann insofern im Sinne einer Grenzlinie verstanden werden, welche bei Erreichen durch das Anodenmaterial bzw. das Kathodenmaterial mit deren Füllstandhöhen zusammen fällt. In anderen Worten ist der Leitfähigkeitsabschnitt nicht so angeordnet, dass es mehrere mögliche Höhen der Grenzlinie zwischen Leitfähigkeitsabschnitt und Isolationsabschnitt gibt. Ausführungsgemäß ist der Leitfähigkeitsabschnitt, insbesondere umfänglich geschlossen ausgebildet, wobei der dem Fußbereich näher zugeordnete Rand des Leitfähigkeitsabschnitts (Grenzlinie) bei bestimmungsgemäßem Gebrauch des Energiespeichers einen horizontalen Verlauf aufweisen kann. Der bestimmungsgemäße Gebrauch des Energiespeichers erfordert typischerweise eine Orientierung des Kopf- und Fußbereichs parallel zur Richtung des Erdanziehungsfeldes. Die Einheitlichkeit der Füllstandhöhe (Grenzlinie) bestimmt sich nach der Genauigkeit des Herstellungs- wie auch Messverfahrens. Ausführungsgemäß ist eine Genauigkeit von +/- 1 bis2 mm geeignet. Durch Vorsehen einer einheitlichen Füllstandhöhe (Grenzlinie), auf welcher der Leitfähigkeitsabschnitt an den Isolationsabschnitt grenzt, kann beispielsweise bei einem definierten Ladezustand des Energiespeichers eine gezielte Entladung über den internen Leitfähigkeitsabschnitt erfolgen. So kann bspw. auch bei vollständiger Aufladung eines elektrochemischen Energiespeichers einem darüber hinausgehendes Aufladen vorgebeugt werden, indem die einheitliche Füllstandhöhe (Grenzlinie) zwischen Leitfähigkeitsabschnitt und Isolationsabschnitt der bestimmungsgemäßen maximalen Füllstandshöhe des Anodenmaterials bzw. Kathodenmaterials entspricht.

Entsprechend einer besonders bevorzugten Ausführungsform der Erfindung ist vorgesehen, dass der Leitfähigkeitsabschnitt in Richtung vom Fußbereich zum Kopfbereich einen zunehmenden Anteil am Gesamtumfang des Ionen leitenden Separators einnimmt. Aufgrund des sich zum Kopfbereich verändernden Anteils kann bei zunehmender Füllstandhöhe etwa des Anodenmaterials sich auch ein zunehmend größer werdender Leckstrom ausbilden, soweit das Kathodenmaterial bereits jeweils über der Füllstandhöhe des Anodenmaterials liegt. Damit kann eine geeignete Anpassung des Leckstroms mit sich veränderndem Ladezustand des Energiespeichers erreicht werden.

Insofern ist es als weiterführende Idee auch möglich, dass die einheitliche Füllstandhöhe definiert durch die Grenzlinie zwischen Leitfähigkeitsabschnitt und Isolationsabschnitt einem Ladezustand des elektrochemischen Speichers von höchstens 100 % der Maximalladung, besonders bevorzugt von höchstens 95 % der Maximalladung entspricht. Die Füllstandhöhe betrifft hierbei insbesondere die Füllstandhöhe des Anodenmaterials im Anodenraum. Damit kommt es lediglich bei voll geladenen Energiespeichern zu einer internen Selbstentladung, die den Energiespeicher vor einer Überladung bewahrt. Entspricht die einheitlich Füllstandhöhe (Grenzlinie) einer höchstens 95 %igen Maximalladung, können auch fertigungstechnische Ungenauigkeiten in dem Ionen leitenden Separator vorteilhaft ausgeglichen bzw. berücksichtigt werden, die andernfalls eine Überladung ermöglichen könnten, da mitunter die maximale Füllstandhöhe nur ungenügend genau eingeschätzt werden kann. Insbesondere kann Aufgrund von Diffusionsvorgängen während des Herstellungsverfahrens der Grenzbereich zwischen Leitfähigkeitsabschnitt und Isolationsabschnitt leicht variieren.

Entsprechend einer weiteren bevorzugten Ausführungsform der Erfindung ist vorgesehen, dass der Leitfähigkeitsabschnitt und der Isolationsabschnitt ein identisches Basismaterial umfassen, welches bevorzugt keramisch ist, wobei der Leitfähigkeitsabschnitt mit wenigstens einem Element dotiert ist, welches eine gegenüber dem Basismaterial höhere elektronische Leitfähigkeit bewirkt. Bevorzugt ist das Basismaterial Na-β-Al₂O₃ bzw. Na-β"-Al₂O₃. Die Dotierung erfolgt vorzugsweise mit Elementen der zweiten bis fünften Hauptgruppe und/oder Nebengruppenelementen. Besonders bevorzugt sind Elemente aus der Gruppe der Erdalkalimetalle und/oder Übergangsmetalle. Besonders vorteilhafte Elemente sind Eisen, Chrom, Mangan, Molybdän, Kobalt, Nickel, Kupfer, Titan, Wolfram, Antimon, Wismut, Magnesium und deren Kombinationen. Das Basismaterial ist das Material, aus welchem der Großteil des Ionen leitenden Separators ausgebildet ist, bzw. welche die Grundstruktur ausbildet. Es ist typischerweise ein Trägermaterial, welches zur Aufnahme von weiteren Materialien dient, welche unterschiedliche Leitfähigkeitseigenschaften, bzw. andere chemische und physikalische Eigenschaften des Separators verleihen.

Eine geeignete Leitfähigkeit liegt typischerweise nach entsprechender Dotierung des Basismaterials vor. Die Dotiermaterialien weisen in dem Basismaterial eine erhöhte intrinsische elektronische Leitfähigkeit auf. Aufgrund der Dotierung ergibt sich ein gegenüber thermischen, wie auch mechanischen äußeren Einflüssen stabiler Ionen leitender Separator. Durch die Stärke der Dotierung kann darüber hinaus der Selbstentladestrom gezielt eingestellt werden. Ebenso ist es möglich, in das Basismaterial eine räumlich variierende Dotierung einzubringen, um beispielsweise eine sich zeitlich ändernde interne Selbstentladung während des Ladens des elektrochemischen Energiespeichers zu erreichen.

Gemäß einer weiteren bevorzugten Ausführungsform der Erfindung ist vorgesehen, dass der Leitfähigkeitsabschnitt und der Isolationsabschnitt ein identisches Basismaterial umfassen, welches bevorzugt keramisch ist, wobei der Leitfähigkeitsabschnitt mit einer elektronisch leitfähigen, perkolierten Sekundärphase versehen ist. Die Sekundärphase kann hierbei bevorzugt aus einem Elementarmetall (Nickel, Kupfer, Silber) ausgeführt sein, oder sie weist etwa eine Metalllegierung auf (bevorzugt auf Basis von Ni, Ag, Cr, Co, Cu und/oder Fe), oder sie weist eine Metalloxidverbindung auf (insbesondere auf Basis von Cr₂O₃, In₂O₃, MnₓO_{y}, FeₓO_{y}, CeO₂, CoₓO_{y} oder TiO₂₎, besonders bevorzugt eine Perowskitverbindung der allgemeinen Form (RE, AE) (Fe, Ti, Cr, Mn, Co, Ni) O₃, wobei RE eine seltene Erde ist und AE mindestens ein Erdalkalielement, oder die Sekundärphase weist ein elektronisch leitfähiges Nichtmetall, wie beispielsweise Kohlenstoff auf. Ein Leitfähigkeitsabschnitt auf der Basis von Kohlenstoff kann etwa durch Carbonisieren eines Polymerharzgegenstands erreicht werden. Kombinationen der vorgenannten Sekundärphasen sind möglich. All die vorgenannten Sekundärphasen bzw. deren Grundmaterialien eignen sich zur Einbringung einer Sekundärphase in die meisten Separatoren. Insbesondere eignen sich diese Materialien zur Einbringung in einen keramischen Separator.

Gemäß einer weiteren bevorzugten Ausführungsform der Erfindung ist vorgesehen, dass der Ionen leitende Separator als Festkörperelektrolyt ausgebildet ist, welcher spezifisch Ionen leitend ist. Eine spezifische Ionenleitfähigkeit liegt vor, wenn lediglich eine oder mehrere Ionenspezies von vorgegebener chemischer Art durch den Separator hindurchtreten können. Eine spezifische Ionenleitfähigkeit kann hierbei etwa durch Dotierung des Basismaterials des Ionen leitenden Separators erreicht werden. Ebenfalls kann durch eine geeignete bereichsweise Dotierung des Separators die Ausbildung eines geeignet geformten Leitfähigkeitsabschnitts erreicht werden. Somit kann sowohl die Ionenleitfähigkeit, wie auch die elektronische Leitfähigkeit bereichsweise gezielt durch gleiche oder ähnliche Verfahren (Dotierverfahren) erreicht werden.

Ausführungsgemäß ist es auch bevorzugt, dass der elektrochemische Energiespeicher auf Basis der Technologie einer Natrium-Nickel-Chlorid-Zelle oder einer Natrium-Schwefel-Zelle ausgebildet ist. Diese Zellen weisen einen technisch bedingten maximalen Ladezustand auf, welcher nicht überschritten werden sollte, um keine Beschädigungen der Zellen zu riskieren. Ein Überladungsschutz bei diesen Zellen kann somit zur Lebensdauerverlängerung dieser beitragen.

Weiterhin ist vorgesehen, dass gemäß einer weiteren Ausführungsform der Erfindung die Betriebstemperatur des elektrochemischen Energiespeichers bei Entladung nicht weniger als 100 °C, bevorzugt nicht weniger als 200 °C ist. Insbesondere ist die Betriebstemperatur bei Entladung nicht höher als 500 °C. Damit liegt die Betriebstemperatur innerhalb der typischen Betriebstemperaturbereiche von nach der Technologie der Natrium-Nickel-Chlorid-Zellen arbeitenden Energiespeichern, sowie nach der Technologie der Natrium-Schwefel-Zellen arbeitenden Energiespeichern.

Gemäß einer ersten besonders bevorzugten Ausführungsform des elektrochemischen Speichermoduls ist vorgesehen, dass das Speichermodul ein elektronisches Ladungsmanagementsystem umfasst, welches keine Schaltung aufweist, die für den Ausgleich eines ungleichen Ladezustands der wenigsten zwei elektrochemischen Energiespeicher vorgesehen ist. Demgemäß wird kein weiterer Schaltungsaufwand erforderlich, um bei dem elektrochemischen Speichermodul dennoch eine Angleichung der einzelnen Ladezustände einzelner Energiespeicher zu erreichen. Dies stellt sich als besonders kostengünstig, wie auch hinsichtlich der elektronischen Anfälligkeit vorteilhaft dar.

Gemäß einer möglichen Ausführungsform des erfindungsgemäßen Verfahrens zur Herstellung eines elektrochemischen Energiespeichers ist der Grünkörper als keramischen Grünkörper ausgebildet, welcher durch die thermische Behandlung gesintert bzw. stabilisiert wird. Die Zusatzstoffe müssen hierbei nicht notwendig identisch sein mit den Dotierungselementen bzw. den Stoffen zur Ausbildung einer Sekundärphase selbst. Diese können sich auch erst während der thermischen Stabilisierung durch chemische Reaktion mit dem Basismaterial des Grünkörpers oder darin eingebrachter Stoffe ausbilden. Ausführungsgemäß kann die Infiltrierung auch nur bereichsweise bzw. abschnittsweise erfolgen, um etwa vorbestimmte Bereiche mit einem Leitfähigkeitsabschnitt zu versehen, andere nicht behandelte Abschnitte verbleiben jedoch als Isolationsabschnitt, bzw. als Abschnitt, der eine geringere elektronische Leitfähigkeit als der Leitfähigkeitsabschnitt aufweist.

Gemäß einer vorteilhaften Weiterführung des erfindungsgemäßen Verfahrens zur Herstellung eines elektrochemischen Energiespeichers ist es möglich, dass das Infiltrieren nach einem der folgenden Verfahren erfolgt:
- Druckinfiltration mit einer Suspension oder einer Lösung;
- Tauchinfiltration mit einer Suspension oder einer Lösung;
- Sol-Gel-Abscheidung;
- Chemische Gasphasenabscheidung;
- Physikalische Gasphasenabscheidung;
- Elektrophoretische Abscheidung.

Die vorstehende Aufzählung stellt keine Einschränkung bzgl. der Infiltrationsmethoden dar, insbesondere sind auch andere Verfahren möglich.

All diese einzelnen Verfahren eignen sich zur Ausbildung eines Leitfähigkeitsabschnitts in dem Ionen leitenden Separator. Insbesondere lassen sich mit diesen Verfahren Grünkörper zerstörungsfrei mit weiteren Stoffen behandeln. Ebenso erlauben diese Verfahren eine vorteilhafte Ortsauflösung zu erreichen, so dass auf dem Ionen leitenden Separator etwa nur definierte Bereiche behandelt werden müssen zur Ausbildung eines geeignet geformten Leitfähigkeitsabschnitts.

Entsprechend einer weiteren Ausführungsform des erfindungsgemäßen Verfahrens ist vorgesehen, dass das thermische Behandeln des Grünkörpers unter oxidierender Atmosphäre erfolgt, insbesondere unter sauerstoffhaltiger Atmosphäre. Eine sauerstoffhaltige Atmosphäre eignet sich insbesondere bei Grünkörpern, die mit einer Metalloxidverbindung zur Ausbildung einer Sekundärphase versehen wurden, bzw. die mit geeigneten Dotierelementen dotiert wurden. Alternativ kann auch eine reduzierende Atmosphäre vorteilhaft sein, welche etwa für die anderen oben genannten Stoffe zur Ausbildung einer leitfähigen Sekundärphase in dem Separator geeignet sind. Gemäß einer weiteren Ausführungsform kann zur Ausbildung einer nicht metallischen Sekundärphase etwa der Separator mit einem Polymer (z.B. Epoxydharz) versehen werden, wobei nach thermischer Behandlung (Carbonisierung) lediglich ein Kohlenstoffgerüst verbleibt, welches eine ausreichende elektronische Leitfähigkeit aufweist. Demgemäß ist also auch vorgesehen, dass das Thermische Behandeln des Grünkörpers unter reduzierender Atmosphäre erfolgt, insbesondere als Carbonisieren eines Polymerharz aufweisenden Grünkörpers unter reduzierender Atmosphäre erfolgt.

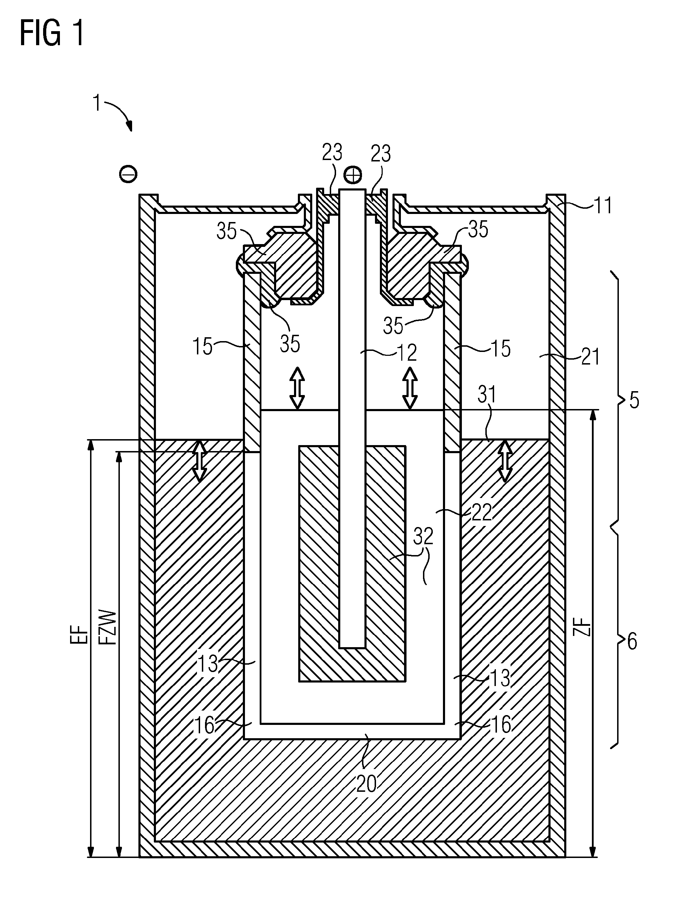

Nachfolgend soll die Erfindung anhand von Einzelausführungsformen gemäß den Figuren 1 bis 3 im Detail näher erläutert werden. Hierbei ist darauf hinzuweisen, dass die Figuren lediglich schematisch zu verstehen sind und dies keine Einschränkung hinsichtlich der Ausführbarkeit erlaubt.

Weiter sollen die in den Figuren gezeigten technischen Merkmale in beliebiger Kombination miteinander beansprucht werden, soweit die Kombination zur Lösung der Erfindungsaufgabe geeignet ist.

Ferner sei darauf hingewiesen, dass alle technischen Merkmale, die mit gleichen Bezugszeichen versehen sind, gleiche technische Wirkungen bzw. Funktionen aufweisen.

Hierbei zeigen:
- FIG 1: eine erste Ausführungsform des erfindungsgemäßen elektrochemischen Energiespeichers 1 in einer seitlichen Schnittansicht;
- FIG 2: eine seitliche Schnittansicht durch ein elektrochemisches Speichermodul 30, umfassend eine Mehrzahl an einzelnen elektrochemischen Energiespeichern 1;
- FIG 3: eine flussdiagrammatische Darstellung einer Ausführungsform des erfindungsgemäßen Verfahrens zur Herstellung eines elektrochemischen Energiespeichers 1, wie vorab bzw. nachfolgend dargestellt.

FIG 1 zeigt einen elektrochemischen Energiespeicher, welcher eine Anode 11, sowie Kathode 12 aufweist. Die Kathode 12 ist hierbei erweitert durch einen Kathodendeckel 23, welcher den Kathodenraum 22 teilweise nach oben hin abschließt. Die Anode 11 ist hierbei mit einem Anodenraum 21 elektrisch verbunden, in welchem ein Anodenmaterial 31 mit einer ersten Füllstandhöhe EF angeordnet ist. Die Kathode 12 ihrerseits ist mit einem Kathodenraum 22 elektrisch verbunden, in welchem ein Kathodenmaterial 32 mit einer zweiten Füllstandhöhe ZF angeordnet ist.

Weiterhin umfasst der elektrochemische Energiespeicher 1 einen Ionen leitenden Separator 13, welcher vorliegend becherförmig ausgebildet ist. Entsprechend einem bestimmungsgemäßen Betrieb des elektrochemischen Energiespeichers 1 finden sich aufgrund der Gravitation sowohl das wenigstens teilweise frei bewegliche Anodenmaterial 31, als auch das wenigstens teilweise frei bewegliche Kathodenmaterial 32 in der Darstellung weiter unten angeordnet. Die Anordnung der Materialien 31, 32 ist folglich näher dem Fußbereich 6 des Ionen leitenden Separators zugeordnet, als dem Kopfbereich 5. Um die Anode 11 bzw. Kathode 12 gasdicht mit dem Ionen leitenden Separator 13 zu verbinden, wird in dem Energiespeicher 1 ein Abdichtmaterial 35 vorgesehen, welches etwa als Glaslot und/oder als Keramikring (α-Al₂O₃) ausgebildet ist. Das Abdichtmaterial 35 erlaubt die gasdichte Verbindung zwischen Anode 11, Kathode 12 und dem Ionen leitenden Separator 13 derart, dass zwischen Anodenraum 21 und Kathodenraum 22 kein Stoffaustausch erfolgen kann, wodurch auch ein Ladungsaustausch verhindert wird.

Bei bestimmungsgemäßem Betrieb des Energiespeichers 1 korrelieren die erste Füllstandhöhe EF und die zweite Füllstandhöhe ZF invers miteinander. Wird der elektrochemische Energiespeicher 1 beispielsweise aufgeladen, steigt die erste Füllstandhöhe EF des Anodenmaterials, was gleichzeitig mit einem Sinken des Kathodenmaterials in dem Kathodenraum 22 einhergeht. Ebenso sinkt die erste Füllstandhöhe EF bei Entladen des elektrochemischen Energiespeichers 1 im Anodenraum 21, was mit einem Steigen der zweiten Füllstandhöhe ZF des Kathodenmaterials 32 einhergeht. Sowohl Anodenmaterial 31 als auch Kathodenmaterial 32 haben Kontakt mit dem Ionen leitenden Separator 13.

Der becherförmige Ionen leitende Separator 13 ist in erster Linie aus Basismaterial 20 hergestellt. Im Kopfbereich 5 des Separators 13 befindet sich ein Leitfähigkeitsabschnitt 15 angeordnet, welcher in der Figur durch eine Schraffierung angedeutet ist. Der Leitfähigkeitsabschnitt 15 grenzt hierbei bei bestimmungsgemäßem Gebrauch des Energiespeichers 1 auf einer einheitlichen Füllstandhöhe (Grenzlinie) (FZW) (bzw. korrespondierend zu einer solchen einheitlichen Füllstandhöhe (Grenzlinie) FZW) an einen Bereich des Ionen leitenden Separators 13, welcher eine geringere elektronische Leitfähigkeit aufweist. Insbesondere ist der nicht als Leitfähigkeitsabschnitt 15 ausgebildete Bereich des Separators 13 vollständig als Isolationsabschnitt 16 ausgebildet. Isolationsabschnitt 16 und Leitfähigkeitsabschnitt 15 grenzen somit auf einer einheitlichen Füllstandhöhe (Grenzlinie) (FZW) (bzw. korrespondierend zu einer solchen einheitlichen Füllstandhöhe (Grenzlinie) FZW) aneinander.

Erfindungsgemäß besteht nun ein Ladezustand des elektrochemischen Energiespeichers 1, bei welchem das Anodenmaterial 31 in dem Anodenraum 21, sowie das Kathodenmaterial 32 in dem Kathodenraum 22 oder ein sonstiger geeigneter elektronischer Leiter im Kathodenraum den Leitfähigkeitsabschnitt 15 auf jeweils einer gegenüberliegenden Seite des Separators 13 kontaktieren. Aufgrund der erhöhten elektronischen Leitfähigkeit des Leitfähigkeitsabschnitts 15 kommt es somit zu einer Ausbildung einer Strombrücke, wodurch ein interner Selbstentladestrom im Inneren des Energiespeichers 1 über den Separator 13 ausgebildet wird. Dadurch kommt es zu einer direkten Entladung, wobei Anodenmaterial 31, wie auch Kathodenmaterial 32 einer stofflichen Änderung durch chemische Reaktion unterworfen sind. Aufgrund der Ausbildung der Strombrücke wird folglich auch die innere Zellspannung vermindert, und die bei Ausbilden des Selbstentladestroms evtl. frei werdende Reaktionswärme im Inneren des Energiespeichers 1 deponiert.

Je nach örtlich variierender Leitfähigkeit innerhalb des Leitfähigkeitsabschnittes kann es jedoch auch sein, dass die erste Füllstandhöhe EF des Anodenmaterials 31, diese durch den Leitfähigkeitsabschnitt 15 bestimmte Füllstandhöhe FZW (Grenzlinie) überschreitet, nämlich dann, wenn etwa durch den näher dem Fußbereich 6 zugeordneten Bereich des Leitfähigkeitsabschnitts 15 lediglich eine geringe interne Stromentladung ermöglicht wird. Insofern ist es auch möglich, wie in FIG 1 ausdrücklich gezeigt, dass die erste Füllstandhöhe EF des Anodenmaterials 31 die durch den Leitfähigkeitsabschnitt 15 bestimmte Füllstandhöhe (FZW) (Grenzlinie) überschreitet. Hierbei ist jedoch bevorzugt darauf zu achten, dass ein solches Überschreiten stets unterhalb der bei betriebsgemäßem Gebrauch des elektrochemischen Energiespeichers 1 maximalen Füllstandhöhe für das Anodenmaterial 31 bleibt.

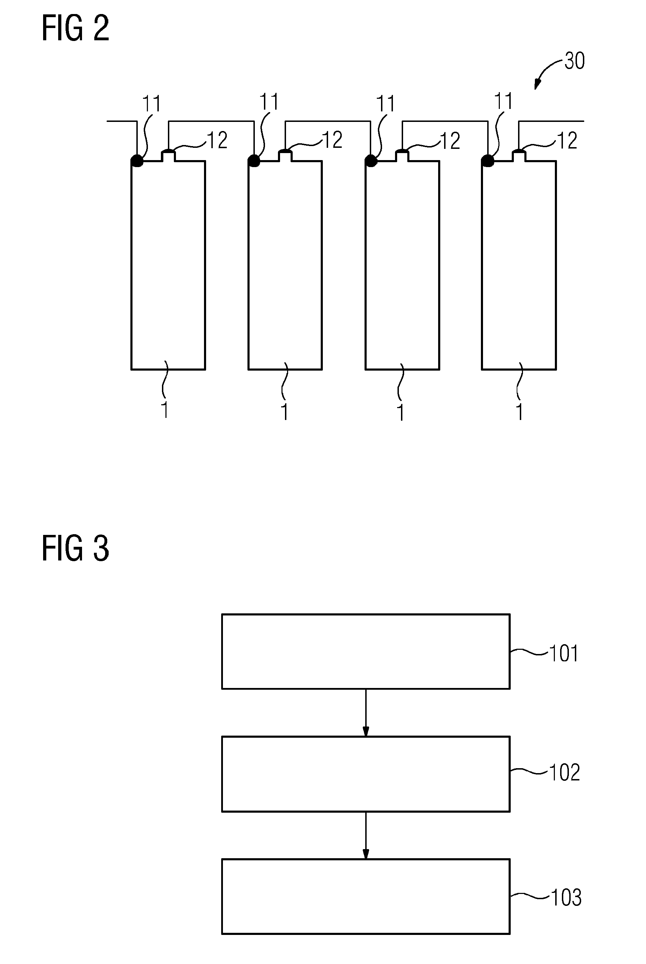

FIG 2 zeigt eine schematische Schnittansicht von der Seite durch ein elektrochemisches Speichermodul 30, welches eine Mehrzahl an miteinander elektrisch seriell verschalteten elektrochemischen Energiespeichern 1 aufweist. Die serielle Verschaltung kontaktiert hierbei jeweils eine Kathode 12 eines Energiespeichers 1 mit einer Anode 11 eines jeweils benachbarten Energiespeichers 1.

FIG 3 zeigt eine flussdiagrammatische Darstellung einer Ausführungsform des erfindungsgemäßen Verfahrens zur Herstellung eines elektrochemischen Energiespeichers 1, welches folgende Schritte umfasst:
- Herstellen des Ionen leitenden Separators 13 durch Bereitstellen eines geformten Grünkörpers (erster Verfahrensschritt 101);
- Infiltrieren des Grünkörpers mit Zusatzstoffen, die zur Ausbildung eines elektronisch leitenden Leitfähigkeitsabschnitts 15 nach thermischer Behandlung geeignet sind (zweiter Verfahrensschritt 102);
- Thermisches Behandeln des Grünkörpers zum Stabilisieren desselben (dritter Verfahrensschritt 103).

Weitere Ausführungsformen ergeben sich aus den Unteransprüchen.

## Patentansprüche

1. Elektrochemischer Energiespeicher (1) mit einer Anode (11), die mit einem Anodenraum (21) elektrisch verbunden ist, in welchem ein Anodenmaterial (31) mit einer ersten Füllstandhöhe (EF) angeordnet ist, und einer Kathode (12), die mit einem Kathodenraum (22) elektrisch verbunden ist, in welchem ein Kathodenmaterial (32) mit zweiter Füllstandhöhe (ZF) angeordnet ist, und einem Ionen leitenden Separator (13), welcher den Anodenraum (21) von dem Kathodenraum (22) trennt, wobei der Ionen leitende Separator (13) bei bestimmungsgemäßem Gebrauch des elektrochemischen Energiespeichers (1) einen Kopfbereich (5) und einen Fußbereich (6) aufweist,
**dadurch gekennzeichnet, dass**
im Kopfbereich (5) des Ionen leitenden Separators (13) ein Leitfähigkeitsabschnitt (15) vorgesehen ist, welcher bei bestimmungsgemäßem Betrieb des elektrochemischen Energiespeichers (1) stärker elektronisch leitend ist, als ein elektronisch isolierender Isolationsabschnitt (16) im Fußbereich (6), wobei wenigstens ein Ladezustand des elektrochemischen Energiespeichers (1) existiert, bei welchem das Anodenmaterial (31) in dem Anodenraum (21) den Leitfähigkeitsabschnitt (15) kontaktiert.

2. Elektrochemischer Energiespeicher gemäß Anspruch 1,
**dadurch gekennzeichnet, dass**
der Ionen leitende Separator (13) genau einen Leitfähigkeitsabschnitt (15) und einen Isolationsabschnitt (16) aufweist, welche aneinander grenzen.

3. Elektrochemischer Energiespeicher gemäß einem der vorhergehenden Ansprüche,
**dadurch gekennzeichnet, dass**
der Leitfähigkeitsabschnitt (15) derart angeordnet ist, dass bei bestimmungsgemäßem Gebrauch des Energiespeichers (1), der Leitfähigkeitsabschnitt (15) auf einer einheitlichen Füllstandhöhe (FZW) an den Isolationsabschnitt (16) grenzt.

4. Elektrochemischer Energiespeicher gemäß Anspruch 3,
**dadurch gekennzeichnet, dass**
die einheitliche Füllstandhöhe (FZW) einem Ladezustand des elektrochemischen Speichers (1) von höchstens 100% der Maximalladung, besonders bevorzugt von höchstens 95% der Maximalladung entspricht.

5. Elektrochemischer Energiespeicher gemäß einem der vorhergehenden Ansprüche,
**dadurch gekennzeichnet, dass**
der Leitfähigkeitsabschnitt (15) und der Isolationsabschnitt (16) ein identisches Basismaterial (20) umfassen, welches bevorzugt keramisch ist, wobei der Leitfähigkeitsabschnitt (15) mit wenigstens einem Element dotiert ist, welches eine gegenüber dem Basismaterial (20) höhere elektronische Leitfähigkeit bewirkt.

6. Elektrochemischer Energiespeicher gemäß einem der vorhergehenden Ansprüche,
**dadurch gekennzeichnet, dass**
der Leitfähigkeitsabschnitt (15) und der Isolationsabschnitt (16) ein identisches Basismaterial (20) umfassen, welches bevorzugt keramisch ist, wobei der Leitfähigkeitsabschnitt (15) mit einer elektronisch leitfähigen, perkolierten Sekundärphase versehen ist.

7. Elektrochemischer Energiespeicher gemäß einem der vorhergehenden Ansprüche,
**dadurch gekennzeichnet, dass**
der Ionen leitende Separator (13) als Festkörperelektrolyt ausgebildet ist, welcher spezifisch Ionen leitend ist.

8. Elektrochemischer Energiespeicher gemäß einem der vorhergehenden Ansprüchen,
**dadurch gekennzeichnet, dass**
der elektrochemische Energiespeicher (1) auf Basis der Technologie einer Natrium-Nickel-Chlorid-Zelle oder einer Natrium-Schwefel-Zelle ausgebildet ist.

9. Elektrochemischer Energiespeicher gemäß einem der vorhergehenden Ansprüchen,
**dadurch gekennzeichnet, dass**
die Betriebstemperatur des elektrochemischen Energiespeichers (1) bei Entladung nicht weniger als 100°C, bevorzugt nicht weniger als 200°C ist.

10. Elektrochemisches Speichermodul (30), welches wenigstens zwei elektrochemische Energiespeicher (1) gemäß einem der vorhergehenden Ansprüche aufweist, die miteinander elektrisch seriell verschaltet sind.

11. Elektrochemisches Speichermodul nach Anspruch 10,
**dadurch gekennzeichnet, dass**
das elektrochemische Speichermodul (30) ein elektronisches Ladungsmanagementsystem umfasst, welches keine Schaltung aufweist, die für den Ausgleich eines ungleichen Ladezustands der wenigstens zwei elektrochemischen Energiespeicher (1) vorgesehen ist.

12. Verfahren zur Herstellung eines elektrochemischen Energiespeichers (1) gemäß einem der vorhergehenden Ansprüche 1 bis 9, welches folgende Schritte umfasst:
- Herstellen des Ionen leitenden Separators (13) durch Bereitstellen eines geformten Grünkörpers;
- Infiltrieren des Grünkörpers mit Zusatzstoffen, die zur Ausbildung eines elektronisch leitenden Leitfähigkeitsabschnitts (15) nach thermischer Behandlung geeignet sind;
- Thermisches Behandeln des Grünkörpers zum Stabilisieren desselben;

13. Verfahren nach Anspruch 12,
**dadurch gekennzeichnet, dass**
das Infiltrieren nach einem der folgenden Verfahren erfolgt:
- Druckinfiltration mit einer Suspension oder einer Lösung;
- Tauchinfiltration mit einer Suspension oder einer Lösung;
- Sol-Gel-Abscheidung;
- Chemische Gasphasenabscheidung;
- Physikalische Gasphasenabscheidung;
- Elektrophoretische Abscheidung;

14. Verfahren nach einem der Ansprüche 12 oder 13,
**dadurch gekennzeichnet, dass**
das thermische Behandeln des Grünkörpers unter oxidierender Atmosphäre erfolgt, insbesondere unter Sauerstoff haltiger Atmosphäre.

15. Verfahren nach einem der Ansprüche 12 oder 13,
**dadurch gekennzeichnet, dass**
das thermische Behandeln des Grünkörpers unter reduzierender Atmosphäre erfolgt, insbesondere als Carbonisieren eines Polymerharzes aufweisenden Grünkörpers unter reduzierender Atmosphäre erfolgt.
